(19) Europäisches Patentamt
European Patent Office
Office européen des brevets

(11) **EP 3 914 977 B1**

(12) **EUROPÄISCHE PATENTSCHRIFT**

(45) Veröffentlichungstag und Bekanntmachung des Hinweises auf die Patenterteilung:
**14.06.2023   Patentblatt 2023/24**

(21) Anmeldenummer: **19711015.8**

(22) Anmeldetag: **01.03.2019**

(51) Internationale Patentklassifikation (IPC):
***G05B 19/4093*** *(2006.01)*   ***B23Q 3/155*** *(2006.01)*

(52) Gemeinsame Patentklassifikation (CPC):
**G05B 19/40938;** B23Q 3/15503; Y02P 90/02

(86) Internationale Anmeldenummer:
**PCT/EP2019/055122**

(87) Internationale Veröffentlichungsnummer:
**WO 2020/177837 (10.09.2020 Gazette 2020/37)**

(54) **VERFAHREN UND VORRICHTUNG ZUR RECHNERGESTÜTZTEN OPTIMIERUNG EINER BELEGUNG VON MAGAZINPLÄTZEN MIT WERKZEUGEN**

METHOD AND DEVICE FOR OPTIMIZING THE OCCUPANCY OF MAGAZINE SPACES BY TOOLS IN A COMPUTER-SUPPORTED MANNER

PROCÉDÉ ET DISPOSITIF D'OPTIMISATION ASSISTÉE PAR ORDINATEUR D'UNE OCCUPATION D'EMPLACEMENTS DE MAGASINAGE PAR DES OUTILS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**01.12.2021   Patentblatt 2021/48**

(73) Patentinhaber: **Siemens Aktiengesellschaft 80333 München (DE)**

(72) Erfinder:
• **BAIER, Georg**
  **81241 München (DE)**
• **HUPP, Lena**
  **81371 München (DE)**
• **ROYER, Christian**
  **85521 Ottobrunn (DE)**
• **BECHER, Silvio**
  **81827 München (DE)**

(74) Vertreter: **Siemens Patent Attorneys Postfach 22 16 34 80506 München (DE)**

(56) Entgegenhaltungen:
**US-A1- 2007 293 379    US-A1- 2014 371 042 US-A1- 2015 248 128**

• **M. MENDES ET AL: "A mixed-integer linear programming model for part mix, tool allocation, and process plan selection in CNC machining centres", INTERNATIONAL JOURNAL OF MACHINE TOOLS AND MANUFACTURE, Bd. 43, Nr. 11, 1. September 2003 (2003-09-01), Seiten 1179-1184, XP055283617, AMSTERDAM, NL ISSN: 0890-6955, DOI: 10.1016/S0890-6955(03)00052-X**

## EP 3 914 977 B1

**Beschreibung**

Die Erfindung betrifft ein Verfahren und eine Steuerungseinrichtung zur rechnergestützten Optimierung einer Belegung von Magazinplätzen mit Werkzeugen innerhalb mindestens eines Werkzeugmagazins für eine Werkzeugmaschine, wobei ein oder mehrere Werkstücke eines Werkstücktyps mit Hilfe der von einem Magazingerät an einem Bereitstellungsplatz bereitgestellten Werkzeuge gefertigt werden.

Eine Werkzeugmaschine ist eine automatisierte Fertigungseinrichtung mit der eine vorgegebene Form an einem Werkstück mittels eines oder mehrerer Werkzeuge erzeugt wird. Mehrere Werkzeuge können einem Werkzeugtyp z.B. Fräsen zugeordnet sein. Ein anderer Werkzeugtyp kann z.B. Bohren sein. Eine Werkzeugmaschine besitzt eine Werkzeugspindel, in der sich das bearbeitende Werkzeug, auch Spindelwerkzeug genannt, bei der Bearbeitung befindet.

Die Werkzeuge, die von der Werkzeugmaschine zur Bearbeitung eines Werkstücks verwendet werden können, sind in einem Werkzeugmagazin abgelegt. Davon gibt es verschiedene Arten. Eine sehr häufig verwendete Form sind Kettenmagazine, die z.B. in der Automobilindustrie zum Einsatz kommen.

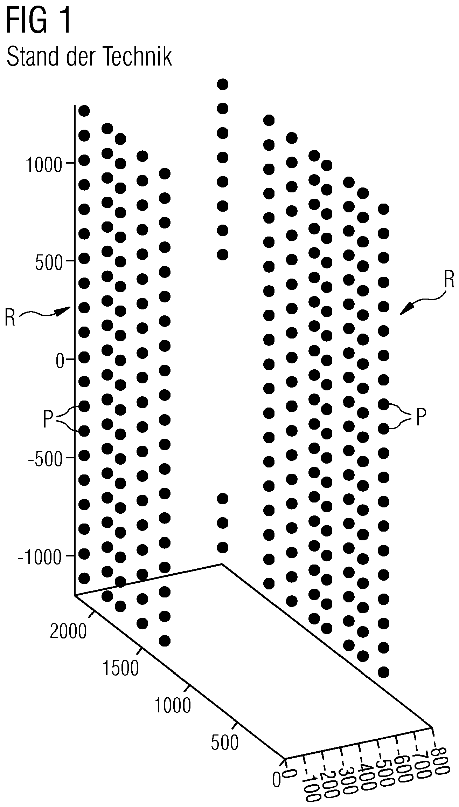

Eine weitere Magazinart sind Regalmagazine R, wie es beispielsweise in Figur 1 angedeutet ist, in denen sehr viele verschiedene Werkzeuge untergebracht werden können (bis zu 500 Werkzeuge oder sogar eventuell noch mehr). Die Werkzeuge sind darin auf festen Magazinplätzen P abgelegt. Ein solches Magazin kann aus einer Hauptseite und einer gegenüberliegenden Gegenseite bestehen.

Das Regalmagazin besitzt eine Vorrichtung insbesondere ein Magazingerät, das in der Figur 1 nicht dargestellt ist, mit der ein Werkzeug auf seinem Magazinplatz P abgelegt und geholt werden kann. Diese Magazinart wird vor allem dann verwendet, wenn eine größere Vielfalt von unterschiedlichen Werkstücken, für die eine Vielzahl an unterschiedlichen Werkzeugen benötigt wird, mit einer Werkzeugmaschine produziert werden soll.

Die Bearbeitung eines Werkstücks eines bestimmten Werkstücktyps erfolgt mit einer vorgegebenen Sequenz von Werkzeugen. Ein Werkzeug kann dabei durchaus mehrmals in dieser Sequenz vorkommen. Die Sequenz ist für alle Werkstücke eines Werkstücktyps z.B. Autositz die gleiche. Die Sequenz kann für Werkstücke eines anderen Werkstücktyps eine andere sein.

Während eines Arbeitsschritts der Bearbeitung eines Werkstücks mit einem Werkzeug der Sequenz, dem Spindelwerkzeug, wird im Regalmagazin das "Vorgängerwerkzeug" des vorhergehenden Arbeitsschritts auf seinen Magazinplatz zurückgefahren bzw. zurückgelegt. Anschließend erfolgt eine Leerfahrt zum Magazinplatz des "Nachfolgerwerkzeugs" des nachfolgenden Arbeitsschrittes. Dieses wird dann aufgenommen und zu einem Bereitstellungsplatz transportiert. Ist der aktuelle Arbeitsschritt, d.h. die Bearbeitung mit dem aktuellen Spindelwerkzeug beendet, so erfolgt ein Austausch des Werkzeugs in der Spindel (z.B. mit einem Werkzeugwechsler). Falls die Bearbeitung mit dem Spindelwerkzeug beendet ist, aber das Nachfolgerwerkzeug für den folgenden Arbeitsschritt noch nicht bereitsteht, entsteht eine Wartezeit bei der Spindelversorgung. Diese einzelnen Wartezeiten reduzieren die Maschinen-Effizienz und erhöhen die Produktionsdauer. Deshalb sollen diese Wartezeiten vermieden werden.

Bei der Minimierung der Wartezeiten bei der Spindelversorgung während der Produktion einer vorgegebenen bzw. vorgebbaren Menge von Werkstücken eines oder mehrerer Werkstücktypen sind folgende Restriktionen zu beachten.

Aufgrund technischer Einschränkungen können Werkzeuge nicht beliebig im Magazin platziert werden, sondern müssen gemäß ihres Platzbedarfs, z.B. gemäß ihres Werkzeugradius und weiteren Anforderungen, entsprechend abgelegt werden. Solche Anforderungen können durch ihre Eigenschaft(en) z.B. Gewicht des Werkzeugs oder auch die Werkzeuglänge sein. Dazu sollte die Eigenschaft(en) des Magazinplatzes z.B. maximale Traglast oder auch Randplatz passen. Das Finden einer zulässigen Platzzuordnung für die Werkzeuge ist in vollen, großen Magazinen eine komplexe Aufgabe.

Werkzeuge haben, neben ihrer eigentlichen Werkzeugeigenschaft, weitere Charakteristika. Sie unterscheiden sich z.B. in Größe und Gewicht. Daher haben Regalmagazine unterschiedliche Platztypen um die entsprechenden Werkzeuge aufzunehmen. Weiterhin können in Regalmagazinen auf Grund von Defekten oder baulichen Besonderheiten bestimmte Plätze gesperrt sein. Daher müssen bei der Zuweisung eines Platzes diverse Bedingungen erfüllt werden.

Ein Werkzeug darf gewöhnlich nicht an jeden Magazinplatz gestellt werden, d.h. es gibt für das Werkzeug zulässige Magazinplätze und unzulässige Magazinplätze bzw. zulässige und unzulässige Werkzeuge pro Magazinplatz.

Eine zulässige Magazinbelegung ist eine Anordnung der Werkzeuge im Magazin, so dass jedes Werkzeug sich auf einem belegbaren Platz befindet und die Platzbedarfe der Werkzeuge sich nicht überlappen. Zulässige Magazinplätze hängen von der aktuellen Belegung des Werkzeugmagazins ab

Der Magazinplatztyp des Werkzeugs und der Magazinplatztyp des Magazins bzw. Regalplatzes müssen kompatibel sein. So dürfen z.B. große Werkzeuge nicht auf Magazinplätze für kleine Werkzeuge gestellt werden und ggf. umgekehrt.

- Werkzeuge dürfen am Rand nicht überragen.
- Auf gesperrten Magazinplätzen dürfen keine

2

Werkzeuge stehen.

- Sind Werkzeuge übergroß, so müssen ein oder eventuell sogar mehrere benachbarte Magazinplätze frei gelassen werden.

Kollisionsfrei hinsichtlich des Platzbedarfs bedeutet in diesem Zusammenhang, dass ein Werkzeug auf einen zulässigen Magazinplatz transportiert bzw. platziert werden kann.

Die Ausgangssituation ist gewöhnlich ein mit Werkzeugen gefülltes (eventuell auch sehr volles) Regalmagazin. Um die oben genannten Restriktionen beachten zu können, erfolgt eine Umlagerung bzw. Umsortierung der Werkzeuge im Regalmagazin. Diese kann nicht hauptzeitparallel (d.h. bei laufender Produktion) durchgeführt werden und bringt somit eine Stillstandzeit der Werkzeugmaschine mit sich. Es ist in diesem Kontext sinnvoll, möglichst viele Werkzeuge wieder auf den alten Magazinplatz zu zuweisen.

In der Patentanmeldung PCT/EP2017/073206 ist bereits ein Verfahren zur rechnergestützten Optimierung einer Belegung von Magazinplätzen mit Werkzeugen innerhalb mindestens eines Werkzeugmagazins für eine Werkzeugmaschine vorgeschlagen worden. Die in dieser Patentanmeldung angegebene Problemlösung benötigt jedoch einen leistungsstarken Rechner bzw. Rechnereinheit, um das dort vorgestellte Optimierungsprogramm lösen zu können.

Die Berechnung der optimalen Platzzuordnung der Werkzeuge im Magazin wird oftmals auf nicht so leistungsstarken Industrie-PCs mit geringem Speicherplatz durchgeführt z.B. einer Edge-Box. Um Stillstandzeiten bei der Produktion zu vermeiden, muss eine sehr schnelle Berechnung der Platzzuordnung auf solchen Industrie-PCs mit wenig Speicherplatz möglich sein.

Aus US 2015/0248128 A1 ist eine Methode zur Kontrolle von Werkzeugwechseloperationen an einer Werkzeugmaschine bekannt. Dabei wird Stillstandzeit der Maschinenvorgänge verringert.

Aus US 2007/0293379 A1 ist eine Werkzeugmaschine mit einem Schneidewerkzeug bekannt, wobei aufeinanderfolgend verschiedenen Schneidewerkzeuge eingesetzt werden.

Aus US 2014/0371042 A1 ist ein kreisförmiges Werkzeugmagazin bekannt.

Aus M. Mendes ET AL: "A mixed-integer linear programming model for part mix, tool allocation,and process plan selection in CNC machining centres", International Journal of Machine Tools and Manufacture, Bd. 43, Nr. 11, 1. September 2003 (2003-09-01), Seiten 1179-1184, ist ein mixed integer linear programming Modell bekannt, welches simultan ein Teilemix, Werkzeugzuordnung und eine Prozessplanauswahl in einem CNC Maschinenzentrum bestimmt.

Es ist Aufgabe der vorliegenden Erfindung, den eingangs erwähnten Stand der Technik zu verbessern.

Diese Aufgabe wird durch die unabhängigen Ansprüche gelöst. Vorteilhafte Weiterbildungen sind Gegenstand der abhängigen Ansprüche.

Die Erfindung beansprucht ein Verfahren zur rechnergestützten Optimierung einer Belegung von Magazinplätzen mit Werkzeugen innerhalb mindestens eines Werkzeugmagazins für eine Werkzeugmaschine, wobei ein oder mehrere Werkstücke eines oder mehrerer Werkstücktypen mit Hilfe der von einem Magazingerät an einem Bereitstellungsplatz bereitgestellten Werkzeuge gefertigt werden, aufweisend folgende Schritte:

a) Erfassen einer Menge von zu fertigender Werkstücke
b) Erfassen einer Menge von Magazinplätzen in mindestens einem Werkzeugmagazin,
c) Erfassen einer Menge von Werkzeugen,
d) Erfassen des Platzbedarfs und gegebenenfalls zumindest einer weiteren Eigenschaft für jedes Werkzeug,
e) Erfassen von zulässigen Magazinplätzen pro Werkzeug, wobei ein zulässiger Magazinplatz vom Platzbedarf und/oder von der weiteren Eigenschaft des Werkzeugs und/oder einer erfassten Eigenschaft des Magazinplatzes abhängt,
f) Erfassen einer zulässigen Ausgangsmagazinbelegung, wobei ein Ausgangsmagazinplatz für jedes Werkzeug erfasst wird,
g) Erfassen einer Sequenz von der Werkzeugmaschine durchzuführender Arbeitsschritte an einem Werkstück, wobei ein für einen Arbeitsschritt der Sequenz vorgesehenes Werkzeug zur Fertigung des Werkstücks verwendet wird,
h) Erfassen von Arbeitsschritt-Zeitdauern, die jeweils zur Durchführung eines einzelnen Arbeitsschritts an dem Werkstück gebraucht wird,
i) Erfassen einer oder mehrerer Bereitstellungszeitdauern abhängig von der Sequenz der durchzuführenden Arbeitsschritte und abhängig von einer Magazinbelegung, welche jeweils für die Bereitstellung eines Werkzeugs für den folgenden Arbeitsschritt vom Magazingerät am Bereitstellungsplatz gebraucht wird,
j) Optimierung der Belegung der Magazinplätze mit Werkzeugen, wobei jedes Werkzeug nur einen zulässigen Magazinplatz kollisionsfrei belegen kann, so dass die gesamte Wartezeit minimiert wird, wobei sich die gesamte Wartezeit zusammensetzt aus einzelnen Wartezeiten, die sich jeweils aus der Differenz zwischen der erfassten Bereitstellungsdauer und der erfassten Arbeitsschritt-Zeitdauer ergeben, wenn der Wert der Differenz positiv ist, andernfalls die einzelne Wartezeit den Wert Null annimmt,

dadurch gekennzeichnet,

k) dass die Optimierung der Belegung der Magazinplätze mit Werkzeugen mittels gemischt ganzzahliger linearer Optimierung derart durchgeführt wird, dass diese Werkzeuge auf denselben Magazinplätzen der Ausgangsmagazinbelegung oder auf zulässigen Magazinplätzen nahe ihres zuvor belegten Magazinplatzes kollisionsfrei platziert werden.

Kollisionsfreie Belegung der Magazinplätze bedeutet, dass die Platzbedarfe der Werkzeuge in Schritt j) sich nicht überlappen dürfen. Die Dauer der minimierten gesamten Wartezeit soll bei Durchführung von Schritt k) beibehalten werden.

Eine Platzierung nahe am zuvor belegten Magazinplatz bedeutet, dass die Transportdauer vom zuvor belegten Magazinplatz zum neuen Magazinplatz möglichst gering ist.

Die weitere Eigenschaft kann das Gewicht und/oder den Werkzeugradius umfassen, welcher jeweils bei der Optimierung der Belegung der Magazinplätze mit Werkzeugen berücksichtigt wird.

Die erfasste Eigenschaft kann für jedes Werkzeug ein Gewicht umfassen und für jede Magazinspalte bestehend aus einer Menge von Magazinplätzen, kann eine maximale Traglast vorgegeben und/oder vorgebbar sein, so dass diese Traglast jeweils bei der Belegung der Magazinplätze mit Werkzeugen im Magazin unterschritten wird.

Die erfasste Eigenschaft zu jedem zulässigen Magazinplatz kann auch eine Rangzahl in einer vom jeweiligen Magazinplatztyp abhängigen hierarchischen Ordnung für jedes Werkzeug umfassen, so dass die Summe über die Rangzahlen optimiert wird. Abhängig von der Sortierung (aufsteigend bzw. absteigend) der Ordnung wird die Summe der Rangzahlen minimiert bzw. maximiert.

Höhere Rangzahlen können hierbei eine höhere Bevorzugung eines Magazinplatzes für ein Werkzeug bedeuten, so dass Werkzeuge auf bevorzugte Plätze hinsichtlich ihrer Rangzahl platziert werden.

Eine Gewichtung zwischen den Schritten j) und k) und/oder vorgenanntem Schritt soll so vorgenommen werden, dass in erster Linie die Dauer der gesamten Wartezeit minimiert wird.

Die erfasste Eigenschaft des Magazinplatzes kann ein bestimmter Platztyp z.B. ein Randplatz, ein Teil-/Halbplatz oder das maximale Belastungsgewicht sein. Das maximale Belastungsgewicht kann dabei eine Rolle bei der Berücksichtigung eines maximalen Belastungsgewichts für eine Magazinplatzspalte bzw. -reihe sein.

Der zuvor belegte Magazinpplatz kann der Ursprungsmagazinplatz und/oder Vorgängermagazinplatz sein.

Die Menge von Werkstücktypen und die Stückzahlen der zu fertigenden Werkstücke jedes Werkstücktyps wird erfasst und fließen in die Optimierung der Belegung der Magazinplätze mit Werkzeugen ein.

Vorteile der Erfindung sind:

o Kürzere Produktionszeiten der Werkzeugmaschinen

o Kürzere Fahrwege bzw. Bereitstellungszeitdauer des Magazingeräts eines Regalmagazins, die letztendlich eine Energieeinsparung und längere Haltbarkeit einbringt.

Die Bereitstellungsdauer setzt sich aus einer Hol-Zeitdauer, die die Zeitdauer für das Holen eines Werkzeugs durch das Magazingerät zum Bereitstellungsplatz von je einem für das Werkzeug zulässigen Magazinplatz umfasst, und aus einer Zurückleg-Zeitdauer, die die Zeitdauer für das Zurücklegen eines Werkzeugs durch das Magazingerät vom Bereitstellungsplatz zu je einem für das Werkzeug zulässigen Magazinplatz umfasst, und aus einer Leerfahrt-Zeitdauer für eine Leerfahrt des Magazingeräts von einem ersten Magazinplatz zu einem anderen zweiten Magazinplatz zusammen.

Gemäß der oben genannten optimierten Belegung können die Werkzeuge von einem Magazingerät des Werkzeugmagazins umplatziert werden.

Eine Menge von Magazinplätzen kann erfasst werden, die jeweils mit einem Werkzeug fest belegt sind und welche durch die Optimierung nicht mit anderen Werkzeugen belegt werden dürfen.

Eine Weiterbildung der Erfindung sieht vor, dass zu den kritische Werkzeugen, für die die genannte Wartezeit einen Wert größer als Null annimmmt, jeweils ein Zielmagazinplatz gemäß der oben genannten optimierten Belegung zugeordnet wird, und desweiteren eine Menge von Transportzeitdauern erfasst wird, die jeweils eine Fahrt des Magazingeräts von einem Magazinplatz zu einem anderen Magazinplatz braucht,

a) wobei eine Menge von Werkzeugtransporten bestimmt wird, für die eine Transportreihenfolge vorgebbar oder vorgegeben ist, so dass die kritischen Werkzeuge oder eine Teilmenge davon in dieser Transportreihenfolge kollisionsfrei hinsichtlich ihres Platzbedarfs von ihrem belegten Magazinplatz (oder Ausgangsmagazinplatz) zu ihrem Zielmagazinplatz gebracht werden können, und

b) wobei die Transportreihenfolge für diese Menge von Werkzeugtransporten derart optimiert wird, dass die Summe der für diese Werkzeugtransporte benötigten Transportzeitdauern minimiert wird.

Eine Weiterbildung der Erfindung sieht vor, dass zumindest ein kritisches Werkzeug aus der erfassten Menge von Werkzeugen von dem von ihm belegten Magazinplatz auf einen anderen belegbaren Magazinplatz kollisionsfrei transportiert wird, um eine mindestens einelementigen Teilmenge von Werkzeugtransporten gemäß vorstehenden Schritt a) zu bestimmen und um mit vorstehenden Schritt b) fortzufahren.

"Kollisionsfrei" bedeutet in diesem Kontext: Die Werkzeuge müssen, wenn diese einen anderen Magazinplatz als den Ausgangsmagazinplatz zugewiesen bekommen, im Werkzeugmagazin kollisionsfrei umzulagern bzw. umsortiert werden.

Eine Weiterbildung der Erfindung sieht vor, dass zumindest ein kritisches Werkzeug aus der erfassten Menge von Werkzeugen, das an dem von ihm belegten Magazinplatz verbleibt, jedoch auf einen anderen belegbaren Magazinplatz kollisionsfrei transportiert werden soll, auf einen Magazinplatz nahe des nach obigen Schritt k) berechneten Magazinplatzes platziert wird, wobei gemäß Schritt a) eine Menge von Werkzeugtransporten bestimmt werden kann, so dass die gesamte Wartezeit minimiert wird.

Gemäß der optimierten Transportreihenfolge können die Werkzeugtransporte mit Hilfe des Magazingeräts durchgeführt werden.

Ein weiterer Aspekt der Erfindung sieht eine Steuerungseinrichtung vor, die insbesondere zur Durchführung des Verfahrens nach oben genannter Art und dessen Ausführungsformen ausgebildet ist. Die Steuereinrichtung (nicht in Figur 1 gezeigt) kann ein der Werkzeugmaschine beigeordneter und ggf. abgesetzt angeordneter Rechner oder in die Werkzeugmaschine integriertes Steuerungsmodul sein.

Die Steuerungseinrichtung zur rechnergestützten Optimierung Steuerungseinrichtung zur rechnergestützten Optimierung einer Belegung von Magazinplätzen mit Werkzeugen innerhalb mindestens eines Werkzeugmagazins für eine Werkzeugmaschine, wobei ein oder mehrere Werkstücke eines oder mehrerer Werkstücktypen mit Hilfe der von einem Magazingerät an einem Bereitstellungsplatz bereitgestellten Werkzeuge gefertigt werden, aufweisend:

a) eine erste Einheit zum Erfassen einer Menge von zu fertigender Werkstücke

b) dieselbe oder eine zweite Einheit zum Erfassen einer Menge von Magazinplätzen in mindestens einem Werkzeugmagazin,

c) dieselbe oder eine dritte Einheit zum Erfassen einer Menge von Werkzeugen,

d) dieselbe oder eine vierte Einheit zum Erfassen des Platzbedarfs und zumindest und gegebenenfalls einer zumindest weiteren Eigenschaft für jedes Werkzeug,

e) dieselbe oder eine fünfte Einheit zum Erfassen von zulässigen Magazinplätzen pro Werkzeug, wobei ein zulässiger Magazinplatz vom Platzbedarf und/oder von der weiteren Eigenschaft des Werkzeugs und/oder einer erfassten Eigenschaft des Magazinplatzes abhängt,

f) dieselbe oder eine sechste Einheit zum Erfassen einer zulässigen Ausgangsmagazinbelegung, wobei ein Ausgangsmagazinplatz für jedes Werkzeug erfasst wird,

g) dieselbe oder eine siebte Einheit zum Erfassen einer Sequenz von der Werkzeugmaschine durchzuführender Arbeitsschritte an einem Werkstück, wobei ein für einen Arbeitsschritt der Sequenz vorgesehenes Werkzeug zur Fertigung des Werkstücks verwendet wird,

h) dieselbe oder eine achte Einheit zum Erfassen von Arbeitsschritt-Zeitdauern, die jeweils zur Durchführung eines einzelnen Arbeitsschritts an dem Werkstück gebraucht wird,

i) dieselbe oder eine neunte Einheit zum Erfassen einer oder mehrerer Bereitstellungszeitdauern abhängig von der Sequenz der durchzuführenden Arbeitsschritte und abhängig von der Ausgangsmagazinbelegung, welche jeweils für die Bereitstellung eines Werkzeugs für den folgenden Arbeitsschritt vom Magazingerät am Bereitstellungsplatz gebraucht wird,

j) eine Optimierungseinheit zur Optimierung der Belegung der Magazinplätze mit Werkzeugen, wobei jedes Werkzeug nur einen zulässigen Magazinplatz kollisionsfrei belegen kann, so dass die gesamte Wartezeit minimiert wird, wobei sich die gesamte Wartezeit zusammensetzt aus einzelnen Wartezeiten, die sich jeweils aus der Differenz zwischen der erfassten Bereitstellungsdauer und der erfassten Arbeitsschritt-Zeitdauer ergeben, wenn der Wert der Differenz positiv ist, andernfalls die einzelne Wartezeit den Wert Null annimmt, gekennzeichnet durch

k) eine weitere Optimierungseinheit zur Optimierung der Belegung der Magazinplätze mit Werkzeugen, wobei die Optimierung mittels gemischt ganzzahliger linearer Optimierung derart durchgeführt wird, dass diese Werkzeuge auf denselben Magazinplätzen der Ausgangsmagazinbelegung oder auf zulässigen Magazinplätzen nahe ihres zuvor belegten Magazinplatzes kollisionsfrei platziert werden.

Dabei können die erste, zweite, dritte, vierte, fünfte, sechste, siebte, achte bzw. neunte Erfassungseinheit in jeder Kombination zu zweit, dritt, viert, fünft etc. in eine Erfassungseinheit integriert sein.

Ein weiterer Aspekt der Erfindung ist ein Computerprogramm(-produkt) mit Programmcodemitteln zur Durchführung des Verfahrens nach einem der vorangehenden Verfahrensansprüche, wenn es auf einer Steuerungseinrichtung der oben genannten Art abläuft oder auf einem computerlesbaren Medium gespeichert ist.

Das Computerprogramm bzw. -produkt kann auf einem computerlesbaren Medium gespeichert sein. Das Computerprogramm bzw. - produkt kann in einer üblichen Programmiersprache (z.B. C++, Java) erstellt sein. Die Verarbeitungseinrichtung kann einen marktüblichen Computer oder Server mit entsprechenden Eingabe-, Ausgabe- und Speichermitteln umfassen. Diese Verarbeitungseinrichtung kann in der Steuerungseinrichtung oder in deren Mitteln integriert sein.

Die Steuerungseinrichtung sowie das Computerprogramm(-produkt) können analog zum oben genannten Verfahren weiter- bzw. ausgebildet sein.

Weitere Vorteile, Einzelheiten und Weiterbildungen der Erfindung ergeben sich aus der nachfolgenden Beschreibung von Ausführungsbeispielen in Verbindung mit den Zeichnungen.

Es zeigen:

Fig. 1    die eingangs erwähnten Plätze in einem Regalmagazin, wobei die Hauptseite rechts und die Gegenseite links angeordnet sind,

Fig. 2    schematisch ein Ablaufdiagramm zum iterativen Verfahren mit einer Startkonfiguration, bei dem das ganzzahlige lineare Optimierungsverfahren angewandt wird,

Fig. 3    schematisch ein Ablaufdiagramm zur Berechnung einer Werkzeugtransferliste, und

Fig. 4    schematisch eine Übersicht zum Nearest-Neighbour(Nächster-Nachbar-) Verfahren für Schritt S11 von Fig. 3.

Die Minimierung der Wartezeiten bei der Spindelversorgung während der Produktion einer vorgegebenen Menge von Werkstücken eines oder mehrerer Typen durch eine gezielte Platzierung der Werkzeuge im Regalmagazin stellt das wesentliche Optimierungskriterium dar.

Die Ausgangssituation - mit Schritt S1 gekennzeichnet - ist gewöhnlich ein mit Werkzeugen gefülltes (eventuell auch sehr volles) Regalmagazin. Es ist möglich, die Heuristik aus der Patentanmeldung "Zuordnen von Werkzeugen zu Plätzen in einem Werkzeugmagazin" mit gleichem Zeitrang anzuwenden, um eine erste zulässige Lösung bzw. Zielzuordnung der Werkzeuge im Magazin zu erhalten. Die Heuristik platziert zunächst alle kritischen Werkzeuge.

Die maximale Zeitdauer eines Zyklus (Zurückbringen bzw. Zurücklegen, Zwischenfahrt und (Ab)holen) lässt sich berechnen. Die Operationen bzw. Arbeitsschritte, die eine kleinere Produktions-/Fertigungszeit als die maximale Zyklusdauer aufweisen werden als kritisch bezeichnet. Als kritische Werkzeuge werden diejenigen Werkzeuge bezeichnet, die während kritischer Operationen im Regalmagazin zurückgebracht oder geholt werden müssen. Die übrigen Werkzeuge werden als nicht-kritische Werkzeuge bezeichnet.

Die genannte Heuristik optimiert jedoch nur hinsichtlich der Wartezeit. Eine spätere Umsortierung der Werkzeuge wird dabei nicht berücksichtigt. Die nicht-kritischen Werkzeuge sollen jedoch möglichst auf ihre Ausgangsplätze gesetzt werden, um die Umsortierzeit zu minimieren. Daher werden die restlichen zu platzierenden Werkzeuge sinnvollerweise mittels des Verfahrens aus der Patentanmeldung "*Verfahren zur rechnergestützten Optimierung einer Belegung von Magazinplätzen mit Werkzeugen*" mit gleichem Zeitrang in das Magazin eingefügt. Dadurch erhält man eine zulässige aber nicht notwendigerweise optimale Lösung bzw. Zielzuordnung der Werkzeuge, die zum einen die Wartezeit und zum anderen die spätere Umsortierung berücksichtigt.

Die Berechnung einer optimalen Lösung bzw. Zielzuordnung erfolgt in Schritt S2. Ein weiteres Optimierungskriterium ist erfindungsgemäß, möglichst viele Werkzeuge auf den "alten" bzw. vorhergehenden bzw. zuvor belegten Magazinplatz oder in die Nähe dessen zu platzieren Zudem soll die Optimierung so erfolgen, dass möglichst gemäß der Platzhierarchisierung bevorzugte Plätze gewählt werden.

Demnach ist die Optimierung der Belegung der Magazinplätze mit Werkzeugen derart durchzuführen, dass die Werkzeuge auf Magazinplätze nahe ihres zuvor belegten Magazinplatzes platziert werden und dabei die Platzhierarchisierungen berücksichtigt wird. Mit anderen Worten ausgedrückt, ist eine zulässige Platzzuordnung aller Werkzeuge zu bestimmen, so dass die Gesamtwartezeit bei der Spindelversorgung während der Produktion minimiert wird und die Werkzeuge möglichst auf bevorzugte Plätze platziert werden, welche nah an ihren Ursprungsplätzen bzw. Vorgängermagazinplätzen liegen.

Danach erfolgt in Schritt S3 eine Umlagerung bzw. Umsortierung der Werkzeuge im Regalmagazin. Diese kann nicht hauptzeitparallel (d.h. bei laufender Produktion) durchgeführt werden und bringt somit eine Stillstandzeit der Werkzeugmaschine mit sich.

Ein Spezialfall von Optimierungsmethoden ist die lineare Optimierung. Sie befasst sich mit der Optimierung linearer Zielfunktionen über einer Menge, die durch lineare Gleichungen und Ungleichungen eingeschränkt ist. Sie ist Grundlage der Lösungsverfahren der (gemischt-) ganzzahligen linearen Optimierung. Ein sogenannter Solver (Löser) ist eine Sammelbezeichnung für spezielle mathematische Computerprogramme, die mathematische Probleme numerisch lösen können. Im Zusammenhang mit MILP (mixed integer linear programming bzw. gemischt ganzzahlige lineare Programmierung) können für IP-Programme (ganzzahlige Optimierungsmodelle) Standardsolver wie z.B. CPLEX, Scip, Gurobi, Xpress verwendet werden.

Im Folgenden wird ein Beispiel beschrieben, in dem mittels eines MILP-Modells (Mixed Integer Linear Programming) eine rechnergestützte Optimierung einer Belegung von Magazinplätzen mit Werkzeugen innerhalb mindestens eines Werkzeugmagazins für eine Werkzeugmaschine, wobei ein oder mehrere Werkstücke eines Werkstücktyps mittels einer Belegung der Magazinplätze mit Werkzeugen gefertigt werden können.

In der MILP-Formulierung gelten die folgenden Bezeichnungen:

Input Parameter:

| | |
|---|---|
| $L$ | Menge aller Magazinplätze |
| $T$ | Menge aller Werkzeuge |
| $T_l$ | Menge der für Platz 1 zulässigen Werkzeuge $cov_{l,\tilde{l}}^t$ |
| | Überdeckter Anteil des Platzes zwischen den Plätzen $l$ und $\tilde{l}$, wenn Werkzeug t auf Platz 1 liegt, $0 \leq cov_{l,\tilde{l}}^t \leq 1$. |
| W | Menge der Werkstücke |
| $Op_w$ | Sequenz von der Werkzeugmaschine durchzuführender Operationen bzw. Arbeitsschritten bei Werkstücktyp w, d.h., $Op_w = (Op_w^1, ..., Op_w^{n_w})$. |
| $quantity_w$ | Zu fertigende Stückzahl von Werkstück w |
| $prodTime_w^i$ | Dauer von $Op_w^i$. |
| $t_w^i$ | Werkzeug in $Op_w^i$ |
| $CritOp_w$ | Menge der Operationen bei Werkstück w, nach denen Wartezeit auftreten kann (kritische Operationen) |
| C | Menge von Vorgänger/Nachfolger Werkzeugen (t, t') für Operationen, nach denen eine Wartezeit auftreten kann (kritische Werkzeuge). |
| $putTime_{t,l}$ | Zeit für das Zurückbringen von Werkzeug t vom Bereitstellungsplatz zu Platz l |
| $getTime_{t,l}$ | Zeit für das Holen von Werkzeug t von Platz l zum Bereitstellungsplatz |
| $moveTime_{l1,l2}$ | Zeit für die Leerfahrt vom Platz $l_1$ zum Platz $l_2$. |
| $toolMoveTime_{l1,l2}^t$ | Zeit für den Transport von Werkzeug t von Platz $l_1$ zu Platz $l_2$. |
| $PreferenceToolLocation_{t,l}$ | Positive Zahl, die den Vorzug bzw. Rang beschreibt, das Werkzeug t auf den Platz l zu platzieren. Ein kleiner Wert gibt einen geringen Vorzug an, ein großer Wert einen hohen. |
| $weightWaitingTime$ | Gewichtung der Wartezeit in der Zielfunktion bzw. bei der Optimierung. |
| $weightNearestLocation$ | Gewichtung der Priorität in der Zielfunktion bzw. bei der Optimierung, dass Nicht-kritische Werkzeuge nahe ihrem ursprünglichen Platz gesetzt werden |
| $weightNearestLocationCriticalTools$ | Gewichtung der Priorität in der Zielfunktion bzw. bei der Optimierung, dass kritische Werkzeuge nahe ihrem ursprünglichen Platz gesetzt werden. |
| weightHierarchy | Gewichtung der Priorität in der Zielfunktion bzw. bei der Optimierung, dass die Werkzeuge auf bevorzugte Plätze (bezüglich der gegebenen Hierarchie) platziert werden. |

Variablen:

| | |
|---|---|
| $setup_{t,l}$ | Platzzuordnung von Werkzeug t zu Platz l. (Wert 1 wenn das Werkzeug dem Platz zugewiesen wird und 0 sonst.) |
| $waitingTime_w^i$ | Nicht-negative Wartezeit, die bei Werkstück w nach Operation i entsteht |
| $h_{t1,t2,l1,l2}$ | Hilfsvariablen, welche den Wert 1 annehmen, wenn Werkzeug $t_1$ auf Platz $l_1$ und Werkzeug $t_2$ auf Platz $l_2$ liegt. Sonst ist die Variable auf den Wert 0 gesetzt. |

Mit dieser Notation kann die Problemstellung als folgendes ganzzahliges lineares Programm formuliert werden. Minimierungsfunktion:

Durch eine Zielfunktion, die sich aus mehreren gewichteten Komponenten zusammensetzt, lassen sich mehrere Zielkriterien gleichzeitig optimieren. Diese werden durch Gewichtungsparameter, die als Input bzw. Eingabe gegeben sind, gesteuert. Das Hauptkriterium bleibt die Minimierung der Wartezeit, welches über den Parameter *weightWaitingTime* $\geq$ 0 gewichtet werden kann.

Die von der Optimierung berechnete neue Werkzeugbelegung muss physikalisch in der Maschine durch Umrüstungen erzeugt werden. In dieser Zeit steht die Maschine voraussichtlich still. Es ist deshalb eine Verbesserung, wenn ein Werkzeug t durch die Optimierung möglichst nahe dem alten bzw. ursprünglichen Platz l$^{old}_t$ gesetzt wird. Als Abstandsmaß lässt sich die Zeit $toolMoveTime^t_{l^{old}_t,l}$ für einen Transport des Werkzeugs t vom ursprünglichen Platz l$^{old}_t$ zum neuen Platz l verwenden. Da kritische Werkzeuge $t \in C$ eine Wartezeit verursachen können, wird für diese die Reduzierung der Wartezeit priorisiert vor der Platzierung nahe dem Ursprungsplatz. Die nicht-kritischen Werkzeuge sollen möglichst nahe ihrem Ursprungsplatz gesetzt werden, um beim anschließenden Umrüsten die Umrüstzeit zu minimieren. Dies kann über den Parameter *weightNearestLocationCriticalTools* $\geq$ 0 für die kritischen bzw. über *weightNearestLocation* $\geq$ 0 für die nicht-kritischen Werkzeuge gesteuert werden. In der Regel wird das Gewicht *weightNearestLocation* deutlich größer gewählt als das Gewicht *weightNearestLocationCriticalTools*. Des Weiteren sollen die Werkzeuge möglichst auf für sie bevorzugte Plätze (bezüglich ihres Rangs in der Platzhierarchie) platziert werden. Die Gewichtung in der Zielfunktion kann über den Parameter *weightHierarchy* $\geq$ 0 gesteuert werden.

$$weightWaitingTime \cdot \sum_{w \in W} \sum_{i \in CritOp_w} waitingTime^i_w \cdot quantity_w$$

$$+\ weightNearestLocation \cdot \sum_{t \in T \setminus C} \sum_{l \in L} \mathrm{setup}_{t,l} \cdot toolMoveTime^t_{l^{old}_t,l}$$

$$+\ weightNearestLocationCriticalTools \cdot \sum_{t \in C} \sum_{l \in L} \mathrm{setup}_{t,l} \cdot toolMoveTime^t_{l^{old}_t,l}$$

$$-\ weightHierarchy \cdot \sum_{t \in T} \sum_{l \in L} \mathrm{setup}_{t,l} \cdot PreferenceToolLocation_{t,l}$$

Nebenbedingungen:

(1) Jedem Werkzeug muss einen Magazinplatz zugewiesen werden.

$$\sum_{l \in L} \mathrm{setup}_{t,l} = 1, \qquad t \in T,$$

(2) Kein Magazinplatz darf mehrfach zugewiesen werden.

$$\sum_{t \in T} \mathrm{setup}_{t,l} \leq 1, \qquad l \in L,$$

(3) Auf einem Magazinplatz darf kein für diesen Platz unzulässiges Werkzeug liegen.

$$\sum_{t \in T \setminus T^l} \mathrm{setup}_{t,l} = 0, \qquad l \in L,$$

(4) Für ein Werkzeugpaar $(t_1, t_2) \in C$ ist $h_{t_1,t_2,l_1,l_2}$ genau dann 1, falls $t_1$ auf $l_1$ und $t_2$ auf $l_2$ liegt.

$$\mathrm{setup}_{t_1,l_1} = \sum_{l_2 \in L,\ l_1 \neq l_2} h_{t_1,t_2,l_1,l_2}, \qquad l_1 \in L, (t_1, t_2) \in C, t_1 \neq t_2,$$

$$\mathrm{setup}_{t_2,l_2} \;=\; \sum_{l_1 \in L, l_1 \neq l_2} \mathrm{h}_{t_1,t_2,l_1,l_2}\,, \qquad l_2 \in L, (t_1,t_2) \in C, t_1 \neq t_2,$$

$$\mathrm{h}_{t_1,t_2,l_1,l_2} \;=\; \mathrm{h}_{t_2,t_1,l_2,l_1}\,, \qquad l_1 \in L,\, l_2 \in L, (t_1,t_2) \in C : (t_2,t_1) \in C, t_1 \neq t_2, l_1 \neq l_2.$$

(5) Es entsteht eine Wartezeit, wenn die Operation $Op^i_w$ kürzer ist, als die Dauer, die das Magazin für das Zurückbringen des vorherigen Werkzeugs, die Zwischenfahrt zum nächsten Werkzeug und das Bereitstellen des nächsten Werkzeugs benötigt.

Für alle $w \in W, i \in CritOp_w$ mit $t_w^{i-1} \neq t_w^{i+1}$ gilt:

$$\mathrm{waitingTime}^i_w \geq \sum_{l_1 \in L} \mathrm{putTime}_{t,l_1} \cdot \mathrm{setup}_{t_w^{i-1},l_1} + \sum_{l_2 \in L} \mathrm{getTime}_{t,l_2} \cdot \mathrm{setup}_{t_w^{i+1},l_2}$$
$$+ \sum_{l_1 \in L, l_2 \in L:\, l_1 \neq l_2} \mathrm{moveTime}_{l_1,l_2} \cdot \mathrm{h}_{t_w^{i-1},t_w^{i+1},l_1,l_2} \; - \mathrm{prodTime}^i_w$$

Für alle $w \in W, i \in CritOp_w$ mit $t_w^{i-1} = t_w^{i+1}$ gilt:

$$\mathrm{waitingTime}^i_w \geq \sum_{l \in L} \mathrm{putTime}_{t,l} \cdot \mathrm{setup}_{t_w^{i-1},l} + \sum_{l \in L} \mathrm{getTime}_{t,l} \cdot \mathrm{setup}_{t_w^{i+1},l}$$
$$+ \sum_{l \in L} \mathrm{moveTime}_{l,l} \cdot \mathrm{setup}_{t_w^{i-1},l} \; - \mathrm{prodTime}^i_w$$

(6) Von einem Werkzeug überdeckte Plätze dürfen nicht von Werkzeugen belegt sein und zwei Werkzeuge dürfen nicht kollidieren.

$$\sum_{t \in T} \mathrm{cov}^t_{l_1,l_2} \cdot \mathrm{setup}_{t,l_1} + \sum_{t \in T} \mathrm{cov}^t_{l_2,l_1} \cdot \mathrm{setup}_{t,l_2} \;\leq\; 1, \qquad l_1, l_2 \in L, l_1 \neq l_2$$

(7) Variablenrestriktionen,

$$\begin{aligned}
\mathrm{setup}_{t,l} &\in \{0,1\}, & t &\in T, l \in L \\
\mathrm{waitingTime}w &\geq 0, & w &\in W, i \in CritOp_w \\
\mathrm{h}_{t_1,t_2,l_1,l_2} &\geq 0, & l_1 &\in L, l_2 \in L, (t_1,t_2) \in C, t_1 \neq t_2, l_1 \neq l_2
\end{aligned}$$

Die Variablen $\mathrm{h}_{t_1,t_2,l_1,l_2} \geq 0$ sind Binärvariablen. Diese zusätzliche Information kann dem Solver übergeben werden. Es ist jedoch vorteilhaft, diese als kontinuierliche Variablen zu setzen.

Modellreduktionen:

Die Gruppe von Restriktionen, (6), zur Berücksichtigung der Platzbedarfe der Werkzeuge umfassen viele überflüssige Ungleichungen. Für viele Magazinplatzpaare $l_1, l_2 \in L, l_1 \neq l_2$ sind diese Ungleichungen immer erfüllt, weil die beiden Magazinplätze sehr weit auseinander liegen. Es genügt Platzpaare zu betrachten, bei denen es ein Werkzeugpaar gibt, welches auf diesen Plätzen abgelegt werden kann und kollidiert. Gibt es ein solches Werkzeugpaar nicht, so haben die Ungleichungen keinen einschränkenden Charakter und können weggelassen werden.

Maximales Belastungsgewicht bzw. Traglast pro Magazinspalte:

Des Weiteren kann ein maximales Belastungsgewicht *maxWeightMag(i)* ≥ 0 pro Magazinspalte durch Hinzufügen zusätzlicher Restriktionen berücksichtigt werden. Sei dazu M die Anzahl der Spalten des Magazins und *Mag(i)* die Menge der Magazinplätze in Spalte i, i=1,..,M. Für jedes Werkzeug $t \in T$ ist zudem sein Gewicht *toolweight(t)* gegeben. Damit lassen sich die Restriktionen wie folgt formulieren:

$$\sum_{l \in Mag(i)} \sum_{t \in T} toolweight(t) \cdot \text{setup}_{t,l} \leq maxWeightMag(i), \qquad i = 1, ..., M.$$

Die Steuerungen von Werkzeugmaschinen bieten unterschiedliche Arten der Verwaltung von Regalmagazinen. Eine z.B. in Sinumerik-Steuerungen mögliche Art ist das Teilplatzmodell. Das Teilplatzmodell ermöglicht die teilweise Belegung eines Magazinplatzes durch ein Werkzeug. Eine Art Sonderform des Teilplatzmodells ist das Halbplatzmodell.

Eine Besonderheit im Halbplatzmodell ist, dass Werkzeuge nicht symmetrisch sein müssen. Ein Werkzeug beansprucht nach oben und unten bzw. links und rechts (je nach Betrachtungsweise) jeweils zwei Halbplätze. Hingegen beansprucht ein anderes Werkzeug nach oben zwei Halbplätze und nach unten bzw. links und rechts (je nach Betrachtungsweise) drei Halbplätze. Beide Werkzeuge überlappen den benachbarten Platz, kollidieren dort jedoch nicht, da sie jeweils nur den oberen bzw. den unteren bzw. den linken bzw. rechten Halbplatz überdecken.

Bei der Optimierung der Belegung der Magazinplätze können die Teil-/Halbplätze berücksichtigt werden mit dem Zweck, dass kein Teil-/Halbplatz von mehreren Werkzeugen überdeckt wird.

Das Ergebnis aus Schritt S1 und S2 ist eine optimierte Belegung der Magazinplätz mit Werkzeugen, wobei die Dauer der gesamten Wartezeit minimiert wird.

Im nächsten Schritt S3 ist es Ziel, eine Transferliste WL zu bestimmen, mit der die kritischen Werkzeuge auf ihre Zielplätze oder zumindest auf Magazinplätze verlagert werden können, die die Gesamtwartezeit bei der Spindelversorgung verbessern. Die nicht-kritischen Werkzeuge sollen möglichst auf ihren alten Plätzen bleiben.

Die Ermittlung dieser Transferliste erfolgt in mehreren Schritten:

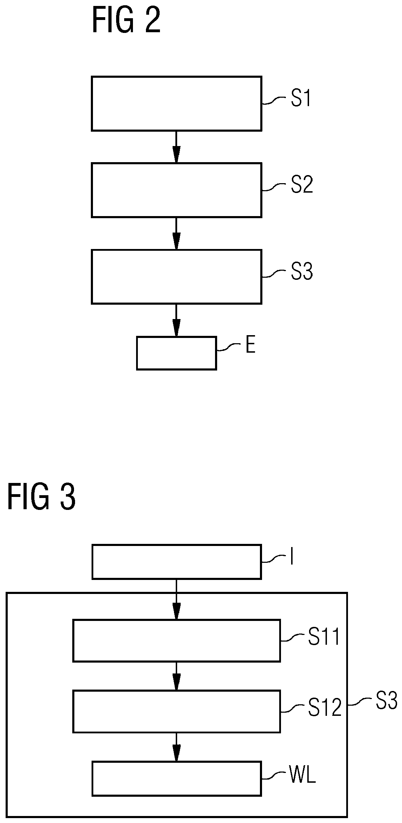

In Schritt S11 der Figur 3 wird zunächst ein Nearest-Neighbour-Verfahren aufgerufen, das versucht die Werkzeugtransfers mit kritischen Werkzeugen durchzuführen. Falls nötig, werden störende Werkzeuge auf den Zielplätzen oder deren Nachbarplätzen auf Ausweichplätze geschoben. Es wird jeweils als nächster Werkzeugtransfer derjenige gewählt, dessen aktueller Magazinplatz zum zuletzt besuchten Magazinplatz die minimale Leerfahrtzeit besitzt.

Eventuell können nicht alle kritischen Werkzeuge auf ihre Zielplätze verschoben werden. Deshalb wird in Schritt S12 versucht, diese jeweils auf einen anderen Magazinplatz zu verlagern, so dass die Gesamtwartezeit weiter verringert wird.

In Schritt S11 wird zunächst eine Methode benötigt, um einen einzelnen Werkzeugtransfer eines kritischen Werkzeugs auf einen möglicherweise belegten Zielplatz ausführen zu können, der die Platzrestriktionen berücksichtigt. Das Werkzeug das verschoben werden soll, wird im Folgenden Transferwerkzeug genannt. Die Funktion Werkzeugtransfer(Transferwerkzeug, Zielplatz) überprüft, ob ein gegebenes Transferwerkzeug auf seinen Zielmagazinplatz verschoben werden kann. Möglicherweise müssen dazu zuerst weitere Werkzeuge weggeräumt werden, um den Zielmagazinplatz freizuräumen. Diese Menge an wegzuräumenden Werkzeugen wird mit W(Zielplatz) bezeichnet.
Werkzeugtransfer(Transferwerkzeug, Zielplatz){

    i. Bestimme alle Werkzeuge W(Zielplatz), die wegtransferiert werden müssen, um das Transferwerkzeug zulässig auf den Zielplatz verschieben zu können.
    ii. Versuche für alle Werkzeuge W(Zielplatz) einen direkten Transfer.
    iii. Falls kein direkter Transfer möglich, versuche einen nicht-direkten Transfer.
    iv. Falls alle Werkzeuge W(Zielplatz) wegtransferiert sind, wird das Transferwerkzeug auf seinen Zielplatz verschoben. Andernfalls wird kein Transfer ausgeführt.

}

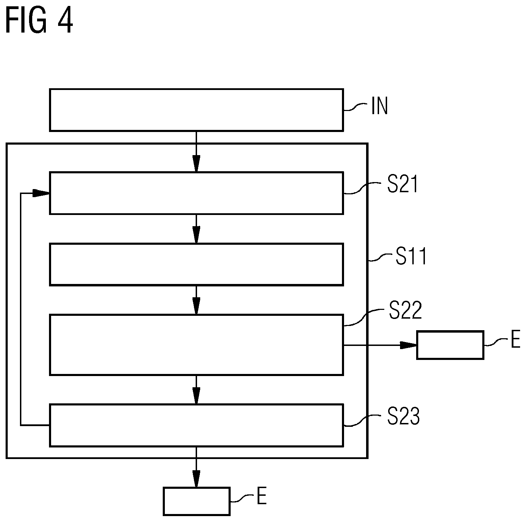

Der direkte Transfer sucht für ein Transferwerkzeug einen freien Platz, auf den es direkt transportiert werden kann, ohne dass Platzrestriktionen verletzt werden und ohne dass weitere Werkzeuge im Magazin verschoben werden müssen. Ist dies möglich, wird der Transfer sofort durchgeführt. Ansonsten wird ein nicht-direkter Transfer versucht. Dabei wird ein Magazinplatz gesucht, welcher durch einen direkten Transfer von einem oder mehreren Werkzeugen im Magazin für das Werkzeug frei geräumt werden kann. Die direkten Transfers der anderen Werkzeuge werden zuerst durchgeführt, danach wird das Transferwerkzeug verschoben. Ist weder ein direkter noch ein nicht-direkter Transfer möglich, so wird für das Werkzeug kein Transfer durchgeführt. Einen Überblick über das Nearest-Neighbour-Verfahren, in welches die Funktion Werkzeugtransfer(Transferwerkzeug, Zielplatz) eingebettet ist, liefert Figur 4.

Das Ziel dieses Verfahren ist es, eine Menge von kritischen Werkzeugen $T_{transfer}$, wenn möglich, auf die vorgegebenen Zielplätze zu transferieren. Das Verfahren ist ein Nearest-Neighbour-Verfahren, welches versucht im jeweils nächsten Schritt immer den Transfer auszuführen, für den die Leerfahrtzeit des Magazingeräts vom aktuellen Ort zu dem Magazinplatz des Werkzeugs, das als nächstes transportiert werden soll, minimal ist.

Der Input IN des Verfahrens ist eine Menge kritischer Werkzeuge, deren zugehörige Zielplätze sowie der zuletzt besuchte Ort des Magazinbediengeräts.

Die Werkzeuge aus $T_{transfer}$ werden in Schritt 21 nach aufsteigender Leerfahrtzeit vom zuletzt besuchten Ort des Magazingeräts zum jeweiligen Magazinplatz des Werkzeugs sortiert. Es wird in Schritt S22 versucht, für das erstmögliche Werkzeug der resultierenden Transferliste Liste ($T_{transfer}$) einen Werkzeugtransfer mit Hilfe der Funktion Werkzeugtransfer(Transferwerkzeug, Zielplatz) durchzuführen. Ist dies nicht möglich, so endet das Verfahren, gekennzeichnet mit E. Anderenfalls wird in Schritt S23 das transferierte Werkzeug auf seinem Zielplatz fixiert und aus der Liste $T_{transfer}$ gelöscht. Wird ein Werkzeug auf seinem Zielplatz fixiert, darf es im Laufe des Verfahrens nicht mehr von dem Platz wegbewegt werden. Das Magazingerät befindet sich nun auf dem Zielplatz des transferierten Werkzeugs, die Liste $T_{transfer}$ wird erneut sortiert und es wird wieder versucht, ein Werkzeug zu transferieren, bis kein Werkzeug aus der Liste $T_{transfer}$ mehr transferiert werden kann oder $T_{transfer}$ leer ist. Im letzteren Fall, terminiert das Gesamtverfahren, auch mit E gekennzeichet, da alle kritischen Werkzeuge auf ihren Zielmagazinplatz transportiert werden konnten. Ist $T_{transfer}$ nicht-leer, wird im nachfolgenden Schritt S12 der Figur 3 versucht, die noch nicht transferierten kritischen Werkzeuge auf Magazinplätze zu verlagern, die die Gesamtwartezeit im Vergleich zur aktuellen Magazinplatzbelegung weiter verbessern.

Schritt S12 läuft ähnlich zu Schritt S11 ab. Der Input ist die Menge aller kritischen Werkzeuge und die kritischen Werkzeuge mit den zugehörigen Zielplätzen, welche noch nicht transferiert wurden, sowie der zuletzt besuchte Ort des Magazingeräts. Zudem wird die aktuelle Magazinbelegung nach Schritt S11 benötigt. Die Werkzeuge aus $T_{transfer}$ werden wieder nach aufsteigender Leerfahrtzeit vom zuletzt besuchten Ort zum jeweiligen Magazinplatz des Werkzeugs sortiert. Jeweils das erste Werkzeug wird aus der Liste entnommen (und aus der Liste gelöscht). Es wird mit Hilfe der Funktion Werkzeugtransfer(Transferwerkzeug, Zielplatz) versucht, die Werkzeuge auf Magazinplätze zu verlagern, die die Gesamtwartezeit im Vergleich zur aktuellen Magazinbelegung weiter verringern. Dazu werden die potentiellen Zielmagazinplätze für das zu transferierende Werkzeug nach aufsteigender Verbesserung der Gesamtwartezeit sortiert. Für die Berechnung der Verbesserung der Gesamtwartezeit werden kurzzeitig alle kritischen Werkzeuge (außer das zu transferierende Werkzeug) fixiert. Damit werden für das Transferwerkzeug nur mögliche Zielmagazinplätze betrachtet, für die keine kritischen Werkzeuge umgelagert werden müssen. Es wird mit Hilfe der Funktion Werkzeugtransfer(Transferwerkzeug, Zielplatz) der Reihe nach versucht, das Transferwerkzeug auf einen der Magazinplätze aus der Liste zu verlagern. Ist dies für keinen Magazinplatz möglich oder ist die Liste der möglichen Magazinplätze leer, wird das nächste Werkzeug aus Liste ($T_{transfer}$) entnommen. Für den erstmöglichen Platz aus der sortierten Liste der Magazinplätze, wird ein Transfer durchgeführt, wodurch sich die Gesamtwartezeit im Vergleich zur aktuellen Magazinbelegung verbessert. Die Magazinbelegung wird aktualisiert und das Transferwerkzeug auf seinem neuen Platz fixiert. Anschließend wird die Liste ($T_{transfer}$) neu sortiert. Das Verfahren terminiert, wenn die Liste der kritischen Werkzeuge leer ist.

Das oben vorgestellte Verfahren, lässt sich zusätzlich mit dem Verfahren, das in der Patentanmeldung PCT/EP2018/074999 schon vorgeschlagen wurde, kombinieren. Ein Teil der kritischen Werkzeuge lässt sich vorweg, wie in dieser Patentanmeldung beschrieben, auf ihre Zielplätze transferieren. Aus der Anfangs- und Zielzuordnung wird dabei zunächst die Menge der durchzuführenden Werkzeugtransfers, bestehend jeweils aus einem Werkzeug und einem Zielplatz, und derer Präzedenzbeziehungen ermittelt. Zur Berechnung einer optimalen Reihenfolge für die (Präzedenz-) zyklenfreien Werkzeugtransfers wird ein asymmetrisches TSP (Traveling Salesman Problem) beschrieben, das mit Hilfe des darin angegebenen gemischt-ganzzahligen linearen Programms gelöst wird. Die kritischen Werkzeuge in Präzedenzzyklen lassen sich dann anschließend mit dem erfindungsgemäßen Verfahren transferieren. Damit kann Rechenzeit reduziert werden.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen, welcher Schutzumfang durch die Ansprüche definiert wird.

Die Implementierung der vorstehend beschriebenen Prozesse oder Verfahrensabläufe kann anhand von Instruktionen erfolgen, die auf computerlesbaren Speichermedien oder in flüchtigen Computerspeichern (im Folgenden zusammenfassend als computerlesbare Speicher bezeichnet) vorliegen. Computerlesbare Speicher sind beispielsweise flüchtige Speicher wie Caches, Puffer oder RAM sowie nichtflüchtige Speicher wie Wechseldatenträger, Festplatten, usw.

Die vorstehend beschriebenen Funktionen oder Schritte können dabei in Form zumindest eines Instruktionssatzes in/auf einem computerlesbaren Speicher vorliegen. Die Funktionen oder Schritte sind dabei nicht an einen bestimmten Instruktionssatz oder an eine bestimmte Form von Instruktionssätzen oder an ein bestimmtes Speichermedium oder an einen bestimmten Prozessor oder an bestimmte Ausführungsschemata gebunden und können durch Software, Firmware, Microcode, Hardware, Prozessoren, integrierte Schaltungen usw. im Alleinbetrieb oder in beliebiger Kombination ausgeführt werden. Dabei können verschiedenste Verarbeitungsstrategien zum Einsatz kommen, beispielsweise serielle Verarbeitung durch einen einzelnen Prozessor oder Multiprocessing oder Multitasking oder Parallelverarbeitung usw.

Die Instruktionen können in lokalen Speichern abgelegt sein, es ist aber auch möglich, die Instruktionen auf einem entfernten System abzulegen und darauf via Netzwerk zuzugreifen.

Unter "rechnergestützt" kann im Zusammenhang mit der Erfindung beispielsweise eine Implementierung des Verfahrens verstanden werden, bei dem insbesondere ein Prozessor mindestens einen Verfahrensschritt des Verfahrens ausführt.

Der Begriff "Prozessor", "zentrale Signalverarbeitung", "Steuereinheit" oder "Datenauswertemittel", wie hier verwendet, umfasst Verarbeitungsmittel im weitesten Sinne, also beispielsweise Server, Universalprozessoren, Grafikprozessoren, digitale Signalprozessoren, anwendungsspezifische integrierte Schaltungen (ASICs), programmierbare Logikschaltungen wie FPGAs, diskrete analoge oder digitale Schaltungen und beliebige Kombinationen davon, einschließlich aller anderen dem Fachmann bekannten oder in Zukunft entwickelten Verarbeitungsmittel. Prozessoren können dabei aus einer oder mehreren Vorrichtungen bzw. Einrichtungen bzw. Einheiten bestehen. Besteht ein Prozessor aus mehreren Vorrichtungen, können diese zur parallelen oder sequentiellen Verarbeitung bzw. Ausführung von Instruktionen ausgelegt bzw. konfiguriert sein. Unter einer "Speichereinheit" kann im Zusammenhang mit der Erfindung beispielsweise ein Speicher in Form von Arbeitsspeicher (engl. Random-Access Memory, RAM) oder eine Festplatte verstanden werden.

**Patentansprüche**

1. Verfahren zur rechnergestützten Optimierung einer Belegung von Magazinplätzen (P) mit Werkzeugen innerhalb mindestens eines Werkzeugmagazins (R) für eine Werkzeugmaschine, wobei ein oder mehrere Werkstücke eines oder mehrerer Werkstücktypen mit Hilfe der von einem Magazingerät an einem Bereitstellungsplatz bereitgestellten Werkzeuge gefertigt werden, aufweisend folgende Schritte:

   a) Erfassen einer Menge von zu fertigender Werkstücke
   b) Erfassen einer Menge von Magazinplätzen (P) in mindestens einem Werkzeugmagazin (R),
   c) Erfassen einer Menge von Werkzeugen,
   d) Erfassen des Platzbedarfs und gegebenenfalls zumindest einer weiteren Eigenschaft für jedes Werkzeug,
   e) Erfassen von zulässigen Magazinplätzen pro Werkzeug, wobei ein zulässiger Magazinplatz vom Platzbedarf und/oder von der weiteren Eigenschaft des Werkzeugs und/oder einer erfassten Eigenschaft des Magazinplatzes abhängt,
   f) Erfassen einer zulässigen Ausgangsmagazinbelegung, wobei ein Ausgangsmagazinplatz für jedes Werkzeug erfasst wird,
   g) Erfassen einer Sequenz von der Werkzeugmaschine durchzuführender Arbeitsschritte an einem Werkstück, wobei ein für einen Arbeitsschritt der Sequenz vorgesehenes Werkzeug zur Fertigung des Werkstücks verwendet wird,
   h) Erfassen von Arbeitsschritt-Zeitdauern, die jeweils zur Durchführung eines einzelnen Arbeitsschritts an dem Werkstück gebraucht wird,
   i) Erfassen einer oder mehrerer Bereitstellungszeitdauern abhängig von der Sequenz der durchzuführenden Arbeitsschritte und abhängig von einer Magazinbelegung, welche jeweils für die Bereitstellung eines Werkzeugs für den folgenden Arbeitsschritt vom Magazingerät am Bereitstellungsplatz gebraucht wird,
   j) Optimierung der Belegung der Magazinplätze mit Werkzeugen, wobei jedes Werkzeug nur einen zulässigen Magazinplatz kollisionsfrei belegen kann, so dass die gesamte Wartezeit minimiert wird, wobei sich die gesamte Wartezeit zusammensetzt aus einzelnen Wartezeiten, die sich jeweils aus der Differenz zwischen der erfassten Bereitstellungsdauer und der erfassten Arbeitsschritt-Zeitdauer ergeben, wenn der Wert der Differenz positiv ist, andernfalls die einzelne Wartezeit den Wert Null annimmt,
   **dadurch gekennzeichnet,**
   k) **dass** die Optimierung der Belegung der Magazinplätze mit Werkzeugen mittels gemischt ganzzahliger linearer Optimierung derart durchgeführt wird, dass diese Werkzeuge auf denselben Magazinplätzen der Ausgangsmagazinbelegung oder auf zulässigen Magazinplätzen nahe ihres zuvor belegten Magazinplatzes kollisionsfrei platziert werden.

2. Verfahren nach dem vorhergehenden Anspruch, **dadurch gekennzeichnet, dass** eine Gewichtung zwischen den Schritten j) und k) vorgenommen wird.

3. Verfahren nach einem der vorhergehenden Ansprüche, **dadurch gekennzeichnet, dass** die erfasste Eigenschaft zu jedem zulässigen Magazinplatz eine Rangzahl in einer vom jeweiligen Magazinplatztyp abhängigen hierarchischen Ordnung für jedes Werkzeug umfasst, so dass die Summe über die Rangzahlen optimiert wird.

4. Verfahren nach dem vorhergehenden Anspruch, **dadurch gekennzeichnet, dass** eine Gewichtung zwischen den Schritten j), k) von Anspruch 1 und dem Schritt von Anspruch 3 vorgenommen wird.

5. Verfahren nach einem der vorhergehenden Ansprüche, **dadurch gekennzeichnet, dass** sich die Bereitstellungsdauer aus einer Hol-Zeitdauer, die die Zeitdauer für das Holen eines Werkzeugs durch das Magazingerät zum Bereitstellungsplatz von je einem für das Werkzeug zulässigen Magazinplatz umfasst, und aus einer Zurückleg-Zeitdauer, die die Zeitdauer für das Zurücklegen eines Werkzeugs durch das Magazingerät vom Bereitstellungsplatz zu je einem für das Werkzeug zulässigen Magazinplatz umfasst, und aus einer Leerfahrt-Zeitdauer für eine Leerfahrt des Magazingeräts von einem ersten Magazinplatz zu einem anderen zweiten Magazinplatz zusammensetzt.

6. Verfahren nach einem der vorhergehenden Ansprüche, **dadurch gekennzeichnet, dass** gemäß der optimierten Belegung die Werkzeuge von einem Magazingerät des Werkzeugmagazins umplatziert werden.

7. Verfahren nach einem der vorhergehenden Ansprüche, **dadurch gekennzeichnet, dass** eine Menge von Magazinplätzen erfasst wird, die jeweils mit einem Werkzeug fest belegt sind.

8. Verfahren nach einem der vorhergehenden Ansprüche, **dadurch gekennzeichnet, dass** die erfasste Eigenschaft für jedes Werkzeug ein Gewicht umfasst und für jede Magazinspalte bestehend aus einer Menge von Magazinplätzen, eine maximale Traglast vorgegeben und/oder vorgebbar ist, so dass diese Traglast jeweils bei der Belegung der Magazinplätze mit Werkzeugen im Magazin unterschritten wird.

9. Verfahren nach einem der vorhergehenden Ansprüche, **dadurch gekennzeichnet, dass** zu den kritische Werkzeugen, für die die genannte Wartezeit einen Wert größer als Null annimmt oder annehmen kann, jeweils ein Zielmagazinplatz gemäß der optimierten Belegung zugeordnet wird, und des Weiteren eine Menge von Transportzeitdauern erfasst wird, die jeweils eine Fahrt des Magazingeräts von einem Magazinplatz zu einem anderen Magazinplatz braucht,

   a) wobei eine Menge von Werkzeugtransporten bestimmt wird, für die eine Transportreihenfolge vorgebbar oder vorgegeben ist, so dass die kritischen Werkzeuge oder eine Teilmenge davon in dieser Transportreihenfolge kollisionsfrei hinsichtlich ihres Platzbedarfs von ihrem belegten Magazinplatz zu ihrem Zielmagazinplatz gebracht werden können, und
   b) wobei die Transportreihenfolge für diese Menge von Werkzeugtransporten derart optimiert wird, dass die Summe der für diese Werkzeugtransporte benötigten Transportzeitdauern minimiert wird.

10. Verfahren nach Anspruch 9, **dadurch gekennzeichnet, dass** zumindest ein kritisches Werkzeug aus der erfassten Menge von Werkzeugen von dem von ihm belegten Magazinplatz auf einen anderen belegbaren Magazinplatz kollisionsfrei transportiert wird, um eine mindestens einelementigen Teilmenge von Werkzeugtransporten gemäß Schritt a) von Anspruch 9 zu bestimmen und um mit Schritt b) von Anspruch 9 fortzufahren.

11. Verfahren nach einem der vorhergehenden Ansprüche 9 oder 10, **dadurch gekennzeichnet, dass** zumindest ein kritisches Werkzeug aus der erfassten Menge von Werkzeugen, das an dem von ihm belegten Magazinplatz verbleibt, jedoch auf einen anderen belegbaren Magazinplatz kollisionsfrei transportiert werden soll, auf einen Magazinplatz nahe des nach Schritt k) von Anspruch 1 berechneten Magazinplatzes platziert wird, wobei gemäß Schritt a) von Anspruch 9 eine Menge von Werkzeugtransporten bestimmt werden kann, so dass die gesamte Wartezeit minimiert wird.

12. Verfahren nach einem der vorhergehenden Ansprüche, **dadurch gekennzeichnet, dass** gemäß der optimierten Transportreihenfolge die Werkzeugtransporte mit Hilfe des Magazingeräts durchgeführt werden.

13. Steuerungseinrichtung zur rechnergestützten Optimierung einer Belegung von Magazinplätzen (P) mit Werkzeugen innerhalb mindestens eines Werkzeugmagazins (R) für eine Werkzeugmaschine, wobei ein oder mehrere Werkstücke eines oder mehrerer Werkstücktypen mit Hilfe der von einem Magazingerät an einem Bereitstellungsplatz bereitgestellten Werkzeuge gefertigt werden, aufweisend:

a) eine erste Einheit zum Erfassen einer Menge von zu fertigender Werkstücke

b) dieselbe oder eine zweite Einheit zum Erfassen einer Menge von Magazinplätzen (P) in mindestens einem Werkzeugmagazin (R),

c) dieselbe oder eine dritte Einheit zum Erfassen einer Menge von Werkzeugen,

d) dieselbe oder eine vierte Einheit zum Erfassen des Platzbedarfs und zumindest und gegebenenfalls einer zumindest weiteren Eigenschaft für jedes Werkzeug,

e) dieselbe oder eine fünfte Einheit zum Erfassen von zulässigen Magazinplätzen pro Werkzeug, wobei ein zulässiger Magazinplatz vom Platzbedarfs und/oder von der weiteren Eigenschaft des Werkzeugs und/oder einer erfassten Eigenschaft des Magazinplatzes abhängt,

f) dieselbe oder eine sechste Einheit zum Erfassen einer zulässigen Ausgangsmagazinbelegung, wobei ein Ausgangsmagazinplatz für jedes Werkzeug erfasst wird,

g) dieselbe oder eine siebte Einheit zum Erfassen einer Sequenz von der Werkzeugmaschine durchzuführender Arbeitsschritte an einem Werkstück, wobei ein für einen Arbeitsschritt der Sequenz vorgesehenes Werkzeug zur Fertigung des Werkstücks verwendet wird,

h) dieselbe oder eine achte Einheit zum Erfassen von Arbeitsschritt-Zeitdauern, die jeweils zur Durchführung eines einzelnen Arbeitsschritts an dem Werkstück gebraucht wird,

i) dieselbe oder eine neunte Einheit zum Erfassen einer oder mehrerer Bereitstellungszeitdauern abhängig von der Sequenz der durchzuführenden Arbeitsschritte und abhängig von der Ausgangsmagazinbelegung, welche jeweils für die Bereitstellung eines Werkzeugs für den folgenden Arbeitsschritt vom Magazingerät am Bereitstellungsplatz gebraucht wird,

j) eine Optimierungseinheit zur Optimierung der Belegung der Magazinplätze mit Werkzeugen, wobei jedes Werkzeug nur einen zulässigen Magazinplatz kollisionsfrei belegen kann, so dass die gesamte Wartezeit minimiert wird, wobei sich die gesamte Wartezeit zusammensetzt aus einzelnen Wartezeiten, die sich jeweils aus der Differenz zwischen der erfassten Bereitstellungsdauer und der erfassten Arbeitsschritt-Zeitdauer ergeben, wenn der Wert der Differenz positiv ist, andernfalls die einzelne Wartezeit den Wert Null annimmt,

**gekennzeichnet durch**

k) eine weitere Optimierungseinheit zur Optimierung der Belegung der Magazinplätze mit Werkzeugen, wobei die Optimierung mittels gemischt ganzzahliger linearer Optimierung derart durchgeführt wird, dass diese Werkzeuge auf denselben Magazinplätzen der Ausgangsmagazinbelegung oder auf zulässigen Magazinplätzen nahe ihres zuvor belegten Magazinplatzes kollisionsfrei platziert werden.

14. Computerprogrammprodukt mit Programmcodemitteln zur Durchführung des Verfahrens nach einem der vorangehenden Verfahrensansprüche, wenn es auf einer Steuerungseinrichtung nach einem der vorangehenden Steuerungseinrichtungsansprüche abläuft oder auf einem computerlesbaren Medium gespeichert ist.

## Claims

1. Method for computer-aided optimization of an occupancy of magazine slots (P) by tools within at least one tool magazine (R) for a machine tool, wherein one or more workpieces of one or more workpiece types are manufactured using the tools provided by a magazine device at a supply point, having the following steps:

a) detecting a set of workpieces to be manufactured,

b) detecting a set of magazine slots (P) in at least one tool magazine (R),

c) detecting a set of tools,

d) detecting the space requirement and possibly at least one further property for each tool,

e) detecting permissible magazine slots per tool, wherein a permissible magazine slot is dependent on the space requirement and/or on the further property of the tool and/or a detected property of the magazine slot,

f) detecting a permissible initial magazine occupancy, wherein an initial magazine slot is detected for each tool,

g) detecting a sequence of work steps to be performed by the machine tool on a workpiece, wherein a tool envisaged for a work step of the sequence is used to manufacture the workpiece,

h) detecting work step times that are each needed to perform an individual work step on the workpiece,

i) detecting one or more supply times, on the basis of the sequence of the work steps to be performed and on the basis of a magazine occupancy, that are each needed by the magazine device at the supply point to provide a tool for the next work step,

j) optimizing the occupancy of the magazine slots by tools, wherein each tool can occupy only one permissible magazine slot without collision, so that the overall waiting period is minimized, wherein the overall waiting period is made up of individual waiting periods that each result from the difference between the detected supply time and the detected work step time if the value of the difference is positive, otherwise the individual waiting period assumes the value zero,

**characterized**

k) **in that** the occupancy of the magazine slots by tools is optimized by means of mixed integer linear optimization such that these tools are placed in the same magazine slots as the initial magazine occupancy or in permissible magazine slots close to their previously occupied magazine slot without collision.

2. Method according to the preceding claim, **characterized in that** a weighting between steps j) and k) is performed.

3. Method according to either of the preceding claims, **characterized in that** the detected property for each permissible magazine slot comprises a rank in a hierarchic order for each tool, which order is dependent on the respective magazine slot type, so that the sum over the ranks is optimized.

4. Method according to the preceding claim, **characterized in that** a weighting between steps j), k) from Claim 1 and the step from Claim 3 is performed.

5. Method according to one of the preceding claims, **characterized in that** the supply time is made up of a fetch time, which comprises the time for the magazine device to fetch a tool to the supply point from one magazine slot permissible for the tool, and of a replace time, which comprises the time for the magazine device to replace a tool from the supply point to one magazine slot permissible for the tool, and of an empty-run time for an empty run by the magazine device from a first magazine slot to another, second magazine slot.

6. Method according to one of the preceding claims, **characterized in that** the tools are relocated by a magazine device of the tool magazine according to the optimized occupancy.

7. Method according to one of the preceding claims, **characterized in that** a set of magazine slots that are each permanently occupied by a tool is detected.

8. Method according to one of the preceding claims, **characterized in that** the detected property for each tool comprises a weight, and a maximum load is prescribed and/or prescribable for each magazine column consisting of a set of magazine slots, so that this load is not reached whenever the magazine slots are occupied by tools in the magazine.

9. Method according to one of the preceding claims, **characterized in that** the critical tools for which said waiting period assumes or can assume a value greater than zero are each assigned a destination magazine slot according to the optimized occupancy, and furthermore a set of transport times required in each case for a journey by the magazine device from one magazine slot to another magazine slot is detected,

   a) wherein a set of tool transports is determined for which an order of transport is prescribable or prescribed, so that the critical tools or a subset thereof can be taken from their occupied magazine slot to their destination magazine slot in this order of transport without collision with regard to their space requirement, and
   b) wherein the order of transport for this set of tool transports is optimized such that the sum of the transport times required for these tool transports is minimized.

10. Method according to Claim 9, **characterized in that** at least one critical tool from the detected set of tools is transported from the magazine slot that it occupies to another occupiable magazine slot without collision in order to determine an at least single-element subset of tool transports according to step a) from Claim 9 and in order to continue with step b) from Claim 9.

11. Method according to either of preceding Claims 9 and 10, **characterized in that** at least one critical tool from the detected set of tools that remains in the magazine slot that it occupies, but is supposed to be transported to another occupiable magazine slot without collision, is placed in a magazine slot close to the magazine slot calculated according to step k) from Claim 1, wherein step a) from Claim 9 can be used to determine a set of tool transports, so that the overall waiting period is minimized.

12. Method according to one of the preceding claims, **characterized in that** the tool transports are performed using the magazine device according to the optimized order of transport.

13. Control facility for computer-aided optimization of an occupancy of magazine slots (P) by tools within at least one tool magazine (R) for a magazine tool, wherein one or more workpieces of one or more workpiece types are manufactured using the tools provided by a magazine device at a supply point, having:

a) a first unit for detecting a set of workpieces to be manufactured,

b) the same or a second unit for detecting a set of magazine slots (P) in at least one tool magazine (R),

c) the same or a third unit for detecting a set of tools,

d) the same or a fourth unit for detecting the space requirement and possibly one at least further property for each tool,

e) the same or a fifth unit for detecting permissible magazine slots per tool, wherein a permissible magazine slot is dependent on the space requirement and/or on the further property of the tool and/or a detected property of the magazine slot,

f) the same or a sixth unit for detecting a permissible initial magazine occupancy, wherein an initial magazine slot is detected for each tool,

g) the same or a seventh unit for detecting a sequence of work steps to be performed by the machine tool on a workpiece, wherein a tool envisaged for a work step of the sequence is used to manufacture the workpiece,

h) the same or an eighth unit for detecting work step times that are each needed to perform an individual work step on the workpiece,

i) the same or a ninth unit for detecting one or more supply times, on the basis of the sequence of the work steps to be performed and on the basis of the initial magazine occupancy, that are each needed by the magazine device at the supply point to provide a tool for the next work step,

j) an optimization unit for optimizing the occupancy of the magazine slots by tools, wherein each tool can occupy only one permissible magazine slot without collision, so that the overall waiting period is minimized, wherein the overall waiting period is made up of individual waiting periods that each result from the difference between the detected supply time and the detected work step time if the value of the difference is positive, otherwise the individual waiting period assumes the value zero,

**characterized by**

k) a further optimization unit for optimizing the occupancy of the magazine slots by tools, wherein the optimization is performed by means of mixed integer linear optimization such that these tools are placed in the same magazine slots as the initial magazine occupancy or in permissible magazine slots close to their previously occupied magazine slot without collision.

14. Computer program product having program code means for performing the method according to one of the preceding method claims when said computer program product runs on a control facility according to one of the preceding control facility claims or is stored on a computer-readable medium.

## Revendications

1. Procédé d'optimisation assistée par ordinateur d'une occupation d'emplacements de magasinage (P) par des outils au sein d'au moins un magasin d'outils (R) pour une machine-outil, dans lequel une ou plusieurs pièces d'un ou de plusieurs types de pièce sont fabriquées à l'aide des outils mis à disposition par un appareil de magasinage à un emplacement de mise à disposition, présentant les étapes suivantes :

a) détection d'une quantité de pièces à fabriquer

b) détection d'une quantité d'emplacements de magasinage (P) dans au moins un magasin d'outils (R),

c) détection d'une quantité d'outils,

d) détection de l'espace requis et, le cas échéant, d'au moins une autre qualité pour chaque outil,

e) détection d'emplacements de magasinage autorisés par outil, dans lequel un emplacement de magasinage autorisé dépend de l'espace requis et/ou de l'autre propriété de l'outil et/ou d'une propriété détectée de l'emplacement de magasinage,

f) détection d'une occupation du magasin de sortie autorisée, dans lequel un emplacement de magasin de sortie est détecté pour chaque outil,

g) détection d'une séquence d'étapes de travail à exécuter par la machine-outil sur une pièce, dans lequel un outil prévu pour une étape de travail de la séquence est utilisé pour fabriquer l'outil,

h) détection des durées d'étape de travail qui est nécessaire à chaque fois pour exécuter une étape de travail individuelle sur la pièce,

i) détection d'une ou de plusieurs durées de mise à disposition en fonction de la séquence des étapes de travail à exécuter et en fonction d'une occupation de magasin, laquelle est utilisée à chaque fois pour la mise à disposition d'un outil pour l'étape de travail suivante par l'appareil de magasinage à l'emplacement de mise à disposition,

j) optimisation de l'occupation des emplacements de magasinage par des outils, chaque outil ne pouvant occuper sans collision qu'un emplacement de magasinage autorisé de sorte que le temps d'attente global est minimisé, le temps d'attente global se composant de différents temps d'attente qui résultent à chaque fois de la différence entre la durée de mise à disposition détectée et la durée détectée de l'étape de travail, lorsque la valeur de la différence est positive, sinon le temps d'attente individuel prend la valeur zéro,

**caractérisé en ce que**

k) l'optimisation de l'occupation des emplacements de magasinage par des outils est réalisée au moyen d'une optimisation linéaire entière mixte de manière telle que ces outils sont placés sans collision sur les mêmes emplacements de magasinage de l'occupation de magasin de sortie ou sur des emplacements de magasinage autorisés près de leur emplacement de magasinage occupé auparavant.

2. Procédé selon la revendication précédente, **caractérisé en ce qu'**une pondération est effectuée entre les étapes j) et k).

3. Procédé selon l'une des revendications précédentes, **caractérisé en ce que** la propriété détectée comprend à chaque emplacement de magasinage autorisé un numéro de rang dans un ordre hiérarchique dépendant du type d'emplacement de magasinage respectif pour chaque outil, de sorte que la somme est optimisée par les numéros de rang.

4. Procédé selon la revendication précédente, caractérisé en qu'une pondération est effectuée entre les étapes j), k) de la revendication 1 et l'étape de la revendication 3.

5. Procédé selon l'une des revendications précédentes, **caractérisé en ce que** la durée de mise à disposition se compose d'une durée de collecte qui comprend la durée de collecte d'un outil par l'appareil de magasinage à l'emplacement de mise à disposition de chaque emplacement de magasinage autorisé pour l'outil, et d'une durée de remise qui comprend la durée de remise d'un outil par l'appareil de magasinage de l'emplacement de mise à disposition à chaque emplacement de magasinage autorisé pour l'outil, et d'une durée de marche à vide pour une marche à vide de l'appareil de magasinage d'un premier emplacement de magasinage à un deuxième autre emplacement de magasinage.

6. Procédé selon l'une des revendications précédentes, **caractérisé en ce que** les outils sont déplacés d'un appareil de magasinage du magasin d'outils selon l'occupation optimisée.

7. Procédé selon l'une des revendications précédentes, **caractérisé en ce qu'**une quantité d'emplacements de magasinage est détectée, lesquels sont à chaque fois occupés d'une manière fixe par un outil.

8. Procédé selon l'une des revendications précédentes, **caractérisé en ce que** la propriété détectée pour chaque outil comprend un poids et pour chaque fente du magasin se composant d'une quantité d'emplacements de magasinage est prédéfinie et/ou peut être prédéfinie une charge maximale, de sorte que cette charge est inférieure à chaque fois lors de l'occupation des emplacements de magasinage par des outils dans le magasin.

9. Procédé selon l'une des revendications précédentes, **caractérisé en ce qu'**aux outils critiques, pour lesquels le temps d'attente cité prend ou peut prendre une valeur supérieure à zéro, est associé à chaque fois un emplacement de magasinage cible selon l'occupation optimisée, et, en outre, une quantité de durées de transport est détectée qui nécessite à chaque fois une course de l'appareil de magasinage d'un emplacement de magasinage vers un autre emplacement de magasinage,

    a) dans lequel une quantité de transports d'outil est déterminée, pour laquelle une séquence de transport peut être prédéfinie ou est prédéfinie de sorte que les outils critiques ou une partie de ceux-ci peuvent être apportés dans cette séquence de transport sans collision en ce qui concerne leur espace requis de leur emplacement de magasinage occupé à leur emplacement de magasinage cible, et

    b) dans lequel la séquence de transport pour cette quantité de transports d'outil est optimisée de manière telle que la somme des durées de transport nécessaires pour ces transports d'outil est minimisée.

10. Procédé selon la revendication 9, **caractérisé en ce qu'**au moins un outil critique de la quantité détectée d'outils est transporté sans collision de l'emplacement de magasinage qu'il occupe à un autre emplacement de magasinage pouvant être occupé pour déterminer une partie au moins à un élément de transports d'outils selon l'étape a) de la revendication 9 et pour poursuivre avec l'étape b) de la revendication 9.

11. Procédé selon l'une des revendications 9 ou 10, **caractérisé en ce qu'**au moins un outil critique, de la quantité détectée d'outils, qui demeure à l'emplacement de magasinage qu'il occupe, doit être cependant transporté sans collision sur un autre emplacement de magasinage pouvant être occupé, est placé sur un emplacement de magasinage près de l'emplacement de magasinage calculé selon l'étape k) de la revendication 1, dans lequel selon l'étape a) de la revendication 9 peut être déterminée une quantité de transports d'outils de sorte que le temps d'attente global est minimisé.

12. Procédé selon l'une des revendications précédentes, **caractérisé en ce que** selon la séquence de transport optimisée, les transports d'outil sont exécutés à l'aide de l'appareil de magasinage.

13. Dispositif de commande pour l'optimisation assistée par ordinateur d'une occupation d'emplacements de magasinage (P) par des outils au sein d'au moins un magasin d'outils (R) pour une machine-outil, dans lequel une ou plusieurs pièces d'un ou de plusieurs types de pièce sont fabriquées à l'aide des outils mis à disposition par un appareil de magasinage à un emplacement de mise à disposition, présentant :

   a) une première unité pour détecter une quantité de pièces à fabriquer
   b) la même ou une deuxième unité pour détecter une quantité d'emplacements de magasinage (P) dans au moins un magasin d'outils (R),
   c) la même ou une troisième unité pour détecter une quantité d'outils,
   d) la même ou une quatrième unité pour détecter l'espace requis et, au moins et le cas échéant, une au moins autre propriété pour chaque outil,
   e) la même ou une cinquième unité pour détecter des emplacements de magasinage autorisés par outil, un emplacement de magasinage autorisé dépendant de l'espace requis et/ou de l'autre propriété de l'outil et/ou d'une propriété détectée de l'emplacement de magasinage,
   f) la même ou une sixième unité pour détecter une occupation autorisée de magasin de sortie, un emplacement de magasin de sortie étant détecté pour chaque outil,
   g) la même ou une septième unité pour détecter une séquence d'étapes de travail à exécuter par la machine-outil sur une pièce, un outil prévu pour une étape de travail de la séquence étant utilisé pour fabriquer la pièce,
   h) la même ou une huitième unité pour détecter des durées d'étape de travail qui est utilisée à chaque fois pour exécuter une étape de travail individuelle sur la pièce,
   i) la même ou une neuvième unité pour détecter une ou plusieurs durées de mise à disposition en fonction de la séquence des étapes de travail à exécuter et en fonction de l'occupation du magasin de sortie, laquelle est utilisée à chaque fois pour la mise à disposition d'un outil pour l'étape de travail suivante par l'appareil de magasinage à l'emplacement de mise à disposition,
   j) une unité d'optimisation pour l'optimisation de l'occupation des emplacements de magasinage par des outils, dans laquelle chaque outil ne peut occuper sans collision qu'un emplacement de magasinage autorisé de sorte que le temps d'attente global est minimisé, le temps d'attente global se composant de différents temps d'attente qui résultent à chaque fois de la différence entre la durée de mise à disposition détectée et la durée d'étape de travail détectée, lorsque la valeur de la différence est positive, sinon le temps d'attente individuel prend la valeur zéro,
   **caractérisé par**
   k) une autre unité d'optimisation pour l'optimisation de l'occupation des emplacements de magasinage par des outils, l'optimisation étant réalisée au moyen d'une optimisation linéaire entière mixte de manière telle que ces outils sont placés sans collision sur les mêmes emplacements de magasinage de l'occupation de magasin de sortie ou sur des emplacements de magasinage autorisés près de leur emplacement de magasinage occupé auparavant.

14. Produit de programme informatique avec des moyens de codage de programme pour exécuter le procédé selon l'une des revendications précédentes, lorsqu'il se déroule sur un dispositif de commande selon l'une des revendications de dispositif de commande précédentes ou est enregistré sur un support lisible par un ordinateur.

# FIG 1
Stand der Technik

FIG 2

FIG 3

FIG 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2017073206 W
- US 20150248128 A1
- US 20070293379 A1
- US 20140371042 A1
- EP 2018074999 W

**In der Beschreibung aufgeführte Nicht-Patentliteratur**

- **AUS M. MENDES et al.** A mixed-integer linear programming model for part mix, tool allocation, and process plan selection in CNC machining centres. *International Journal of Machine Tools and Manufacture,* 01. September 2003, vol. 43 (11), 1179-1184